Europäisches Patentamt

European Patent Office

Office européen des brevets

(11) Numéro de publication : **0 449 738 A1**

# (12) DEMANDE DE BREVET EUROPEEN

(21) Numéro de dépôt : **91400854.5**

(22) Date de dépôt : **29.03.91**

(51) Int. Cl.⁵ : **F16L 41/12**

(30) Priorité : 30.03.90 FR 9004072

(43) Date de publication de la demande :
02.10.91 Bulletin 91/40

(84) Etats contractants désignés :
**BE DE DK ES IT LU NL**

(71) Demandeur : **LA BUVETTE**
**Deville**
**F-08800 Montherme (FR)**

(72) Inventeur : **Gustin, Jean-Pierre**
**15, rue de l'Arquebuse**
**F-08800 Charleville Mezières (FR)**

(74) Mandataire : **Loyer, Bertrand et al**
**Cabinet Pierre Loyer 77, rue Boissière**
**F-75116 Paris (FR)**

(54) **Dispositif de piquage pour alimenter, à partir d'une canalisation primaire rigide, une canalisation secondaire semi-rigide ou souple.**

(57)    Dispositif de piquage pour alimenter à partir d'une canalisation primaire (1) rigide une canalisation secondaire (2) semi-rigide ou souple, du genre comportant un étrier (3) globalement en forme de U destiné à être positionné sur la canalisation primaire (1), un joint (5) coiffant l'extrémité de la canalisation secondaire (2) et présentant un alésage (52) pour la mise en communication des canalisations primaire (1) et secondaire (2), un collier (7) rigide positionné autour du joint (5) par un alésage axial (70) et enfilé sur les branches parallèles de l'étrier (3) et des écrous (8) vissés sur les extrémités filetées des branches de l'étrier (3).

Un manchon (6) rigide présentant un corps cylindrique (60) dont la face externe porte des cannelures (61) est disposé dans l'extrémité de la canalisation secondaire (2), tandis que le joint (5) et l'alésage axial (70) du collier (7) sont tronconiques et de même conicité.

EP 0 449 738 A1

La présente invention concerne d'une manière générale la mise en oeuvre d'un piquage pour l'alimentation d'une conduite à partir d'une autre.

De tels dispositifs sont couramment mis en oeuvre afin de distribuer un fluide, par exemple de l'eau, en plusieurs points à partir d'une canalisation primaire unique.

Ces dispositifs sont souvent assez longs à mettre en place et nécessitent l'utilisation d'un grand nombre de pièces, spécialement lorsque l'une des deux conduites est formée par un tuyau déformable tels que des tuyaux en matières plastiques semi-rigides ou souples.

C'est pourquoi l'on cherche à proposer des dispositifs de piquage de conception plus simple et surtout de mise en oeuvre beaucoup plus rapide.

Le brevet américain N° 4 494 780 décrit à cet effet un dispositif de piquage comportant un joint de forme globalement cylindrique dont une extrémité des destinée à être mise en place sur l'extrémité de la canalisation secondaire tandis que l'autre extrémité est conformée afin d'être disposée autour d'une ouverture pratiquée dans la canalisation primaire. Ce joint est maintenu par un étrier globalement en U, disposé autour de la canalisation primaire, dont les extrémités sont solidarisées à des pattes radiales présentées par un collier rigide disposé autour du joint.

Un tel dispositif ne permet pas d'assurer une étanchéité parfaite dans le temps du fait qu'il n'y aucun moyen pour serrer radialement le joint afin de rattraper les jeux pouvant apparaître entre la canalisation secondaire et le joint du fait des tolérances de fabrication ce qui peut provoquer un déplacement de ladite canalisation secondaire et éventuellement sa sortie du joint.

La présente invention tend alors à proposer un dispositif de piquage qui tout en pouvant être monté de manière aisée et rapide, assure un maintien parfait des canalisations et donc une bonne étanchéité du piquage.

Un tel dispositif sera par exemple tout à fait adapté lorsque l'on désirera installer des dispositifs tels que des abreuvoirs dont l'alimentation est prévue par un piquage sur une canalisation primaire.

L'utilisation du dispositif de l'invention permet d'une part d'utiliser des tuyaux déformables beaucoup moins chers et plus simples d'emploi et d'autre part de réaliser le piquage très rapidement.

Selon la présente invention, on propose un dispositif de piquage pour alimenter à partir d'une canalisation primaire rigide une canalisation secondaire semi-rigide ou souple, du genre comportant un étrier globalement en forme de U dont les extrémités des branches parallèles sont filetées, destiné à être positionné sur la canalisation primaire, un joint présentant un alésage destiné à coiffer l'extrémité de la canalisation secondaire et présentant un alésage destiné à mettre en communication les canalisations primaire et secondaire, un collier rigide destiné à être positionné autour du joint par un alésage axial et enfilé par des ouvertures sur les branches parallèles de et des écrous destinés à être vissés sur les extrémités filetées des branches de l'étrier, caractérisé en ce qu'un manchon rigide présentant un corps cylindrique dont la face externe porte des cannelures est disposé dans l'extrémité de la canalisation secondaire, et en ceque le joint et l'alésage axial du collier sont tronconiques et de même conicité.

L'invention est également remarquable en ce que :

– la paroi cylindrique entourant l'alésage dudit joint présente une paroi de fond dont sont solidaires un embout de piquage et un embout de raccordement dirigés l'un vers l'extérieur et l'autre vers l'intérieur de ladite paroi cylindrique, à travers lesquels s'étend l'alésage mettant en communication les canalisations primaire et secondaire,
– lesdits embouts de piquage et de raccordement ont une face externe conique dont le diamètre se réduit lorsque l'on s'éloigne de la paroi de fond,
– le joint est conformé autour dudit embout de piquage avec une face d'appui au moins partiellement cylindrique,
– le manchon comporte à une extrémité du corps un bourrelet avec un alésage interne de forme conique dont la section se réduit en direction dudit corps et en ce que le diamètre externe dudit bourrelet est tel que l'on peut l'insérer dans la paroi cylindrique du joint,
– l'alésage se raccorde à un alésage de plus petit diamètre par un épaulement destiné à exercer une pression sur l'extrémité du joint,
– le collier présente deux anses traversées par les ouvertures,
– il comporte de plus une plaque d'appui présentant un fond conformé pour être positionné sur la canalisation , ledit étrier devant être positionné dans cette plaque d'appui.

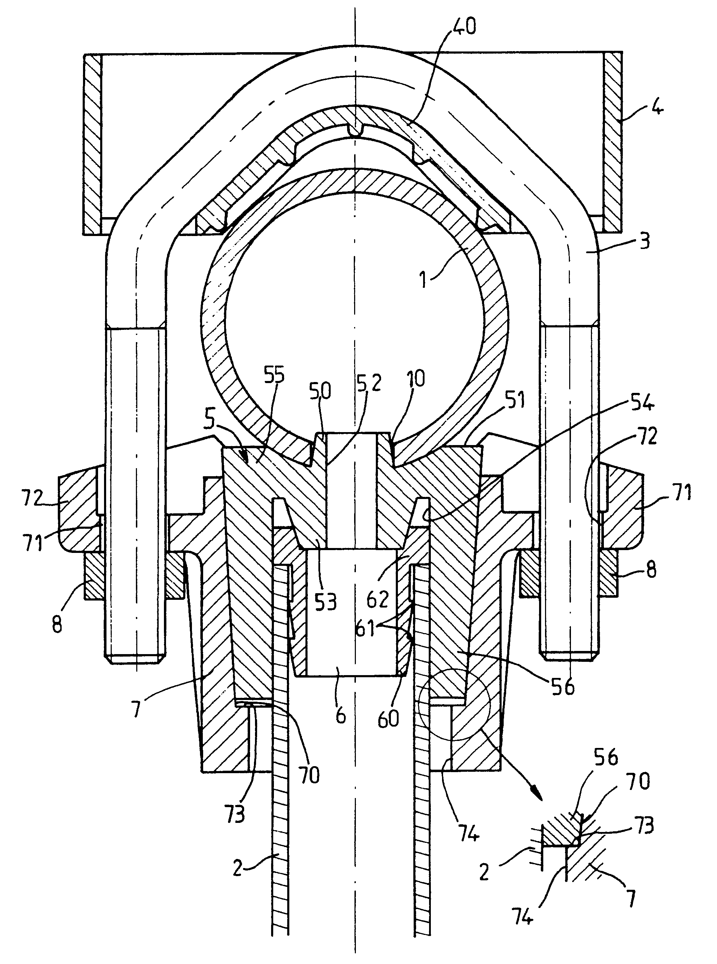

La présente invention sera mieux comprise par la description qui va suivre d'un exemple de mise en oeuvre de celle-ci en référence à la figure unique ci-jointe montrant le dispositif en coupe.

Sur la figure, on voit la canalisation primaire 1 rigide sur laquelle doit être effectué le piquage pour alimenter la canalisation secondaire 2 semi-rigide ou souple.

Le dispositif de piquage selon l'invention comporte un étrier 3 disposé autour de la canalisation primaire 1.

Cet étrier 3 est globalement en forme de U à deux branches parallèles dont les extrémités sont filetées.

Comme représenté sur la figure, cet étrier est positionné à travers une plaque d'appui 4 présentant un fond 40 conformé afin de pouvoir être positionné sur des canalisation 1 de différents diamètres.

La plaque d'appui 4 est fabriquée en matière plastique, par exemple du polypropylène, son utilisation permet de ne pas abîmer la canalisation 1 par un appui direct de l'étrier 3 prévu pour sa part en acier galvanisé.

Le piquage se fait à travers une ouverture 10 réalisée par avance sur la canalisation 1 par tout moyen connu.

Dans cette ouverture 10, est positionné un embout de piquage 50 présenté par un joint 5, par exemple en néoprène.

Le joint 5 est conformé autour dudit embout de piquage 50 avec une face d'appui 51 au moins partiellement cylindrique afin de s'appliquer convenablement contre la face externe de la canalisation primaire 1.

Le joint 5 a globalement la forme d'un tronc de cône traversé par un alésage cylindrique 54. La paroi 56 est fermée à son extrémité de plus grand diamètre par une paroi de fond 55 traversée par un alésage 52 destiné à mettre en communication les canalisations primaire 1 et secondaire 2.

Vers l'intérieur du joint 5, l'alésage 52 débouche à travers un embout de raccordement 53.

Les embouts de piquage 50 et de raccordement 53 sont prévus avec leur face externe conique, le diamètre externe desdits embouts se réduisant lorsque l'on s'éloigne de la paroi de fond 55 du joint 5 vers l'extérieur ou vers l'intérieur de celui-ci.

Comme visible sur la figure, un manchon 6 est positionné dans l'extrémité ouverte de la canalisation secondaire 2.

Ce manchon 6 est prévu en une matière rigide telle que du polyamide afin d'empêcher tout écrasement de ladite canalisation secondaire 2 prévue semi-rigide ou souple.

Ce manchon présente un corps cylindrique 60 dont la face externe porte des cannelures 61.

L'une des extrémités du corps 60 est entourée d'un bourrelet 62 dont l'alésage interne est de forme conique avec sa section se réduisant en direction du corps 60 dudit manchon 6.

Le diamètre externe dudit bourrelet 62 est tel que le manchon puisse être inséré dans l'alésage 54 du joint 5.

Le dispositif de piquage se compose encore d'un collier 7 destiné à brider les composants ci-dessus décrits, après qu'ils ont été positionnés les uns par rapport aux autres comme il sera décrit plus loin, afin d'assurer le maintien du piquage.

Ce collier 7 présente un corps globalement cylindrique portant à une extrémité deux anses 71 traversées par des ouvertures 72 pour être enfilées sur les extrémités des branches parallèles de l'étrier 3.

Le collier est en partie traversé par un alésage 70 conique dont le diamètre diminue à mesure que l'on s'éloigne de l'extrémité portant les anses 71. Cet alésage 70 se raccorde par un épaulement 73 à un alésage cylindrique 74 de plus petit diamètre. Le diamètre de cet alésage 74 est tout de même toujours supérieur au diamètre externe de la canalisation 2.

La conicité de l'alésage 70 est identique à celle du joint 5.

Le collier 7 est réalisé en une matière rigide, par exemple du polyamide 6-6 chargé de fibres de verre afin de résister aux contraintes auxquelles il sera soumis.

Des écrous 8 sont également prévus afin d'être vissés sur les branches filetées de l'étrier pour maintenir le dispositif de piquage en place.

Lorsque l'on désire réaliser un piquage d'une canalisation secondaire 2 formée par un tuyau semi-rigide ou souple sur une canalisation primaire 1 rigide, il faut selon l'invention positionner le manchon 6, le joint 5 et le collier 7 sur ladite canalisation secondaire.

Bien entendu, on enfilera tout d'abord le manchon 6 dans la canalisation 2 que l'on aura enfilé à travers le collier 7. On positionnera alors la canalisation 2 et le manchon 6 dans le joint 5 jusqu'à ce que le manchon 6 soit en contact avec l'embout 53. Avec les cannelures 61 au contact de la paroi interne de la canalisation 2, on a donc réalisé un emmanchement prêt à être comprimé.

On vient ensuite introduire ledit collier 7 autour du joint 5 déjà solidaire de 6 et 2. La paroi externe de l'embout de raccordement 53 et la paroi de l'alésage du bourrelet 62 ayant été prévus coniques, un tel positionnement peut toujours être fait dans de bonnes conditions.

L'étrier 3 monté comme représenté à la figure, sur le fond 40 de la plaque d'appui est alors positionné sur la canalisation primaire 1 avec ses branches parallèles de chaque côté de l'ouverture 10 prévue pour le piquage.

Le sous-ensemble formé par le collier 7 et par la canalisation 2 avec le manchon 6 et le joint 5 formé comme décrit plus haut est alors inséré par l'embout de piquage 50 dans l'ouverture 10 de la canalisation 1. On fait alors coulisser le collier 7 afin qu'il se positionne autour du joint 5 tout en l'enfilant par les ouvertures 72 sur les branches parallèles de l'étrier 3.

Cette mise en place du collier 7 sur le joint 5 se fait dans de bonnes conditions, puisque l'on a prévu la face externe du joint 5 conique avec son diamètre diminuant à mesure que l'on s'éloigne de la paroi de fond 55 dudit joint 5 et l'alésage axial 70 du collier 7 conique avec son diamètre se réduisant en s'éloignant de l'extrémité portant les anses 71 suivant la même conicité.

Les écrous 8 sont alors engagés sur les branches de l'étrier 3 afin de serrer le dispositif de piquage.

Comme on peut le comprendre aisément, le serrage des écrous 8 tend à rapprocher le collier 7 du fond de l'étrier 3. Se faisant, le joint 5 est enfoncé par son embout de piquage 50 dans l'ouverture 10 de la canalisation primaire 1 jusqu'à ce que la face d'appui 51 soit parfaitement appliquée contre la paroi externe de ladite canalisation, ce qui assure une étanchéité parfaite du montage.

Ce mouvement relatif du collier 7 et du joint 5 permet d'appliquer sur la canalisation 2 un effort de serrage radial.

Ledit joint 5 est également compressé entre l'alésage axial 70 du collier 7 et la paroi de la canalisation 2 à l'intérieur de laquelle se trouve le manchon 6. Cette compression due au déplacement de l'alésage conique 70 le long du joint conique 5 est encore améliorée par la pression exercée par l'épaulement 73 sur la face d'extrémité du joint lorsqu'ils arrivent en contact comme montré sur le détail.

Le manchon 6 et le collier 7 étant rigides, le joint 5 applique un effort important sur la canalisation 2 qui est alors appliquée fermement et maintenue par les cannelures 61 à l'encontre de tout déplacement tendant l'arracher du dispositif. De plus ce serrage permet d'adapter le positionnement relatif des différents éléments au diamètre externe de la canalisation secondaire 2 afin que l'étanchéité du montage ne soit pas détruite du fait de la variation de ce diamètre due aux tolérances de fabrication de la canalisation.

L'épaulement 73 du collier 7 est utile non seulement lors du montage mais encore au cours de la vie du piquage afin d'éviter que le joint ne puisse glisser et permettre à la canalisation 2 de s'extraire peu à peu. Ceci occasionnerait en effet au moins des fuites si ce n'est une rupture totale de la liaison entre les canalisations.

Comme on aura pu le comprendre, un tel dispositif présente l'avantage d'être aisé à mettre en oeuvre puisque le seul serrage des écrous afin de brider l'étrier 3 permet d'assurer le montage parfait et étanche de l'ensemble sur la canalisation primaire 1 ainsi que celui du joint sur la canalisation secondaire.

Le dispositif selon l'invention présente également l'avantage de ne nécessiter aucune opération de filetage de la canalisation secondaire qui est alors utilisée sans raccord supplémentaire quelle que soit la matière qui la compose.

Afin d'éviter tout risque d'un déplacement relatif en rotation du joint 5 par rapport au collier 7 on pourra prévoir sur la paroi de l'alésage 70 et sur la surface externe du joint 5 des formes concaves de direction axiale coopérant les unes avec les autres.

**Revendications**

1. Dispositif de piquage pour alimenter à partir d'une canalisation primaire (1) rigide une canalisation secondaire (2) semi-rigide ou souple, du genre comportant un étrier (3) globalement en forme de U dont les extrémités des branches parallèles sont filetées, destiné à être positionné sur la canalisation primaire (1), un joint (5) présentant un alésage (54) destiné à coiffer l'extrémité de la canalisation secondaire (2) et présentant un alésage (52) destiné à mettre en communication les canalisations primaire (1) et secondaire (2), un collier (7) rigide destiné à être positionné autour du joint (5) par un alésage axial (70) et enfilé par des ouvertures (72) sur les branches parallèles de l'étrier (3) et des écrous (8) destinés à être vissés sur les extrémités filetées des branches de l'étrier (3), caractérisé en ce qu'un manchon (6) rigide présentant un corps cylindrique (60) dont la face externe porte des cannelures (61) est disposé dans l'extrémité de la canalisation secondaire (2), et en ce que le joint (5) et l'alésage axial (70) du collier (7) sont tronconiques et de même conicité.

2. Dispositif selon la la revendication 1, caractérisé en ce que la paroi cylindrique (56) entourant l'alésage (54) dudit joint présente une paroi de fond (55) dont sont solidaires un embout de piquage (50) et un embout de raccordement (53) dirigés l'un vers l'extérieur et l'autre vers l'intérieur de ladite paroi cylindrique (56), à travers lesquels s'étend l'alésage (52) mettant en communication les canalisations primaire (1) et secondaire (2).

3. Dispositif de piquage selon la revendication 2, caractérisé en ce que lesdits embouts de piquage (50) et de raccordement (53) ont une face externe conique dont le diamètre se réduit lorsque l'on s'éloigne de la paroi de fond (55).

4. Dispositif de piquage selon la revendication 2 ou 3, caractérisé en ce que le joint (5) est conformé autour dudit embout de piquage (50) avec une face d'appui (51) au moins partiellement cylindrique.

5. Dispositif de piquage selon l'une quelconque des revendications 1 à 4, caractérisé en ce que le manchon (6) comporte à une extrémité du corps (60) un bourrelet (62) avec un alésage interne de forme conique dont la section se réduit en direction dudit corps (60) et en ce que le diamètre externe dudit bourrelet (62) est tel que l'on peut l'insérer dans l'alésage (54) du joint (5).

6. Dispositif selon l'une quelconque des revendications 1 à 5, caractérisé en ce que l'alésage (70) se raccorde à un alésage (74) de plus petit diamètre par un épaulement (73) destiné à exercer une pression sur l'extrémité du joint (5).

7. Dispositif de piquage selon l'une quelconque des revendications précédentes, caractérisé en ce que le collier (7) présente deux anses (71) traversées par les ouvertures (72).

8. Dispositif de piquage selon l'une quelconque des revendications précédentes, caractérisé en ce qu'il comporte de plus une plaque d'appui (4) présentant un fond (40) conformé pour être positionné sur la canalisation (1), ledit étrier devant être positionné dans cette plaque d'appui (4).

**Office européen des brevets**

# RAPPORT DE RECHERCHE EUROPEENNE

Numero de la demande

EP 91 40 0854

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | US-A-4494780 (C.E. BURNETT)<br>* abrégé; figures * | 1, 9 | F16L41/12<br>F16L47/00<br>F16L41/08 |
| A | US-A-4850617 (D. L. MOBERLY)<br>* abrégé; figures * | 1, 9 | |
| A | DE-A-2639739 (U. TIEDT)<br>* page 5, ligne 8 - page 6, ligne 29; figures * | 1-9 | |
| A | US-A-4574443 (S.R. PERSAK)<br>* abrégé; figures * | 1-9 | |
| A | GB-A-2008219 (A. RASCHER)<br>* abrégé; figures * | 3 | |
| A | GB-A-2214255 (S.IKEDA)<br>* abrégé; figures * | 3, 4 | |
| A | GB-A-1232938 (WAVIN N.V.) | | |
| A | DE-C-3719552 (F.J. WOLF) | | **DOMAINES TECHNIQUES RECHERCHES (Int. Cl.5 )**<br><br>F16L |

Le présent rapport a été établi pour toutes les revendications

| Lieu de la recherche:<br>LA HAYE | Date d'achèvement de la recherche<br>04 JUILLET 1991 | Examinateur<br>FRANKS N.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)